# EUROPÄISCHE PATENTSCHRIFT

(11) **EP 1 756 463 B1**
(45) Veröffentlichungstag und Bekanntmachung des Hinweises auf die Patenterteilung: **11.01.2012**
(21) Anmeldenummer: 05758040.9
(22) Anmeldetag: 07.06.2005
(51) Int. Cl.: F16L 39/04

(54) **DREHDURCHFÜHRUNG MIT EINER GASRÜCKFÜHRUNG**
ROTARY TRANSMISSION LEADTHROUGH PROVIDED WITH A GAS RETURN LINE
JOINT TOURNANT MUNI D'UNE CONDUITE DE RETOUR DE GAZ

(30) Priorität: 07.06.2004 DE 202004008992 U
(43) Veröffentlichungstag der Anmeldung: 28.02.2007
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Fiener, Josef
(86) Internationale Anmeldenummer: PCT/EP2005/006093
(87) Internationale Veröffentlichungsnummer: WO 2005/121626

(56) Entgegenhaltungen:
- US-A- 3 734 652
- US-A- 4 260 183
- US-A- 5 351 727
- US-A- 5 386 858

## Beschreibung

Die Erfindung betrifft eine Drehdurchführung mit einer Gasrückführung, insbesondere zum Befüllen von Fahrzeug-Gastanks, gemäß den oberbegrifflichen Merkmalen des Anspruches 1.

Mit derartigen Drehdurchführungen soll eine sichere und schnell anschließbare Übertragung eines Fluids von einer Druckquelle, beispielsweise von einer Erdgas-Betankungsanlage aus zu einem Fahrzeug erreicht werden. Besonders wichtig ist hierbei die einfache, problemlose Bedienbarkeit, so dass auch bei hohen Betankungsdrücken von 200 bar und mehr eine problemlose Handhabung ermöglicht wird, insbesondere im Zusammenwirken mit Schnellanschlusskupplungen. Der Anschluss derartiger Kupplungen kann bei großen Durchlassquerschnitten (z. B. der Busbetankung) aufgrund von Verdrillungen (Tordierung) des Anschlussschlauches relativ kraftaufwendig sein. Zudem kann beim Aufstecken der Kupplung der Steuerungshebel dadurch in eine ungünstige Lage gelangen, so dass eine Einhand-Bedienung kaum noch möglich ist.

Zur Behebung derartiger Probleme wurde in der WO 98/05898 des Anmelders eine Drehdurchführung in Verbindung mit einer Schnellanschlusskupplung beschrieben, wobei die Schnellanschlusskupplung ein Gehäuse mit einem Fluideinlass und einem Fluidauslass aufweist, sowie mehrere Ventile vorgesehen sind, um eine sichere Abdichtung der Schnellanschlusskupplung bis zur vollständigen Herstellung der Verbindung zu gewährleisten. Zum Ausgleich der Verdrillung des Anschlussschlauches wurde dabei eine Drehdurchführung vorgeschlagen, die in die Schnellanschlusskupplung integriert ist und auch eine Gasrückführung über eine zweite Leitung aufweist. Die hierbei vorgeschlagenen Leitungen weisen jedoch noch einen relativ hohen Bauaufwand und Bauraum auf, da jeweils an der Drehdurchführung und schlauchseitig entsprechende Anschlüsse, wie Überwurfmuttern und dgl. vorgesehen sein müssen.

US-A-4 260 183 offenbart eine Drehdurchführung mit den Merkmalen des Oberbegriffs des Anspruchs 1.

Demzufolge liegt der Erfindung die Aufgabe zugrunde, eine Drehdurchführung mit Gasrückführung, insbesondere zum Einsatz in einer Schnellanschlusskupplung der eingangs genannten Art zu schaffen, die bei einfachem Aufbau eine besonders kompakte Bauweise bietet.

Diese Aufgabe wird gelöst durch eine Drehdurchführung mit Gasrückführung gemäß den Merkmalen des Anspruches 1. Bevorzugte Weiterbildungen der Erfindung sind Gegenstand der Unteransprüche.

Die vorgeschlagene Drehdurchführung mit Gasrückführung eignet sich insbesondere für den Einsatz mit einer Schnellanschlusskupplung zur Gasbetankung, wobei sich eine besonders einfache und kompakte Bauweise ergibt, da die Rückführleitung koaxial zur Zuleitung angeordnet ist und somit nur ein Schlauch sichtbar ist. Insbesondere für die bevorzugte Ausführungsform zur Befüllung von Fahrzeug-Gastanks wird somit beim Anschluss bzw. beim Lösen der Schnellanschlusskupplung ein gegenseitiges Verdrillen des Anschlussschlauches und der Gas-Rückführleitung sicher vermieden.

Zudem sind in vorteilhafter Weise die Verschraubungen der Zuleitung innerhalb der Rückführleitung und damit sicher gekapselt, so dass bei eventuell auftretenden Undichtigkeit der Hochdruckverschraubungen oder der Zuleitung durch Diffusion austretendes Gas innerhalb der Rückführleitung abgeleitet werden kann. Dies ist insbesondere aus Umweltschutzgründen wichtig, da somit kein Gasvolumen verloren gehen kann.

Zudem wird auch die Handhabung erleichtert, da sowohl die Zuleitung als auch die Gas-Rückführleitung in Torsionsrichtung voneinander entkoppelt sind, so dass keine übermäßige Kraftanwendung erforderlich ist. Es sei darauf hingewiesen, dass sich die vorgeschlagene Drehdurchführung für verschiedene Kupplungen oder Anschlüsse eignet, wobei die Drehdurchführung auch als Nachrüstteil insbesondere für lange Zuleitungen als gesondertes Bauteil ausgebildet sein kann.

Durch die bevorzugt in eine Schnellanschlusskupplung integrierte Drehhülse wird somit eine vollständige Drehbeweglichkeit der Schnellanschlusskupplung relativ zur Zuleitung bei jedem Druckniveau erreicht, so dass eine Verdrillung des Anschlussschlauches und der dazu koaxialen Gas-Rückführleitung vermieden wird. Hierdurch ist die relative Verdrehbarkeit der beiden koaxialen Schläuche zueinander gewährleistet, so dass die Schnellanschlusskupplung ohne großen Kraftaufwand angeschlossen werden kann.

Nachfolgend wird ein Ausführungsbeispiel anhand der beiliegenden Zeichnung näher erläutert und beschrieben. Hierin zeigen:
Fig. 1 eine Seitenansicht einer teilweisen dargestellten Schnellanschlusskupplung mit einer integrierten Drehdurchführung und einer Gas-Rückführleitung im Halbschnitt; und
Fig. 2 eine abgewandelte Ausführungsform der Zuleitung.

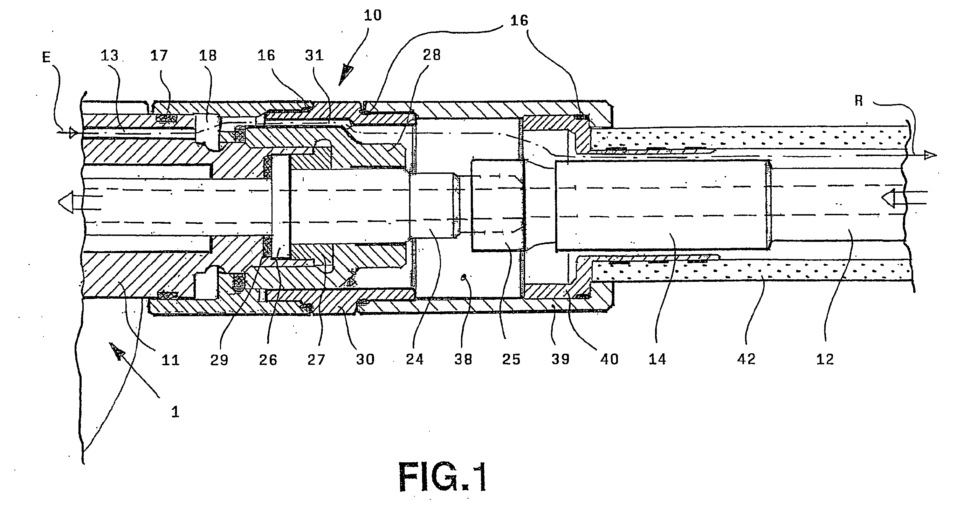

In Fig. 1 ist ein bevorzugtes Ausführungsbeispiel einer Drehdurchführung 10 zum Einsatz zusammen mit einer hier links angedeuteten Schnellanschlusskupplung 1 dargestellt, die an einen nicht dargestellten Anschlussnippel angekuppelt werden kann. Die Schnellanschlusskupplung 1 weist ein rohrförmiges Gehäuse 11 mit einer zentralen Fluidpassage (vgl. Doppelpfeil) auf, wobei hier von rechts die Fluidzufuhr über eine Zuleitung 12 erfolgt, die nach links zur Weiterleitung des zu übertragenden Fluids an den Anschlussnippel dient. Die Zuleitung 12 weist einen Anschlussadapter 14 auf, der auf das Schlauchende der Zuleitung 12 aufgepresst und/oder aufgeschraubt ist. Hieran schließt sich eine Hochdruck-Verschraubung 25 an, die zu einer Drehhülse 24 führt und innerhalb der Drehdurchführung 10 entsprechend abgedichtet ist. Die schlauchförmige Zuleitung 12, der Anschlussadapter 14, die Verschraubung 25 und die in der Drehdurchführung 10 eingesetzte Drehhülse 24 sind hierbei in Anpassung an das jeweils zu übertragende Fluid, insbesondere an die jeweils gewünschten Zuführdruckwerte, Durchlassquerschnitte usw. entsprechend gestaltet.

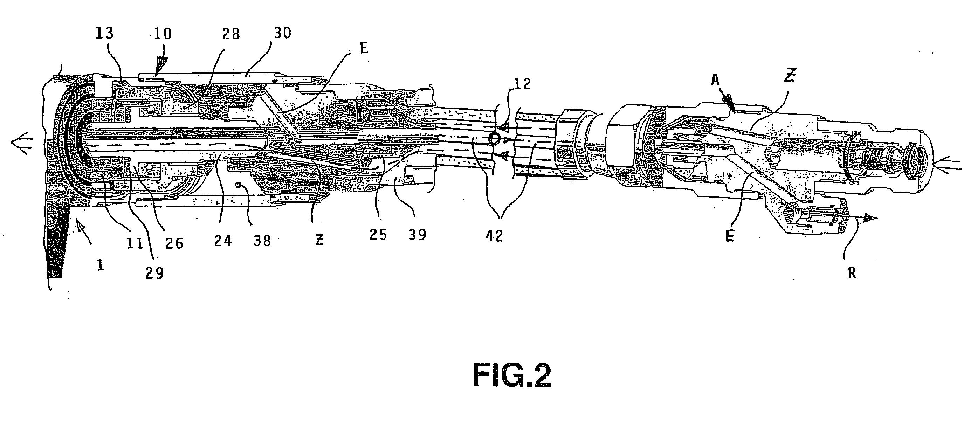

In dem Gehäuse 11 sind bevorzugt mehrere, in Rohrform angeordnete Spannzangen (nicht dargestellt) vorgesehen, die zum Aufstecken auf den Anschlussnippel dienen, um die Schnellanschlusskupplung 1 an diesem zu verriegeln. Dieser Aufbau ist zum Beispiel in der eingangs genannten WO 98/05898 gezeigt, so dass eine weitere Beschreibung entbehrlich ist. Es sei lediglich noch erwähnt, dass innerhalb des Gehäuses 11 eine Entlüftungspassage E in Form einer axialen Entlüftungsbohrung 13 gebildet ist, die zu einem Entlüftungsventil führt und parallel zur zentralen Fluidpassage (vgl. Doppelpfeil) der Schnellanschlusskupplung 1 verläuft. Weiterhin ist an der Drehhülse 24 ein Ringbund 26 vorgesehen, der mittels einer Gleitscheibe 29 und/oder einem Wälzlager (vgl. Fig. 2) gegenüber dem Gehäuse 11 verdrehbar ist. An der anderen Sirnfläche des Ringbundes 26 liegt eine Gegenhülse 27 an, die mit einer Überwurfmutter 28 gegen das Gehäuse 11 gespannt ist. Um diese Überwurfmutter 28 herum ist ein Ring 30 vorgesehen, der an seinem Innenumfang mehrere axial verlaufende Schlitze 31 aufweist.

Wenn nun zum Abkuppeln das Entlüftungsventil geöffnet wird, strömt zum Druckabbau Gas entlang der Entlüftungspassage E über die Entlüftungsbohrung 13, einen Zwischen- oder Ausgleichsraum 18, die vorstehend erwähnten Schlitze 31 und einen Ringraum 38 nach rechts zur Rückführung R, wie dies strichpunktiert dargestellt ist. Der Ringraum 38 ist hierbei ebenso wie die gesamte Entlüftungspassage E durch Dichtungen 16 bzw. 17 nach außen hin abgedichtet, so dass das Gas nur im Ringspalt zwischen der Zuleitung 12 und der koaxialen Rückführleitung 42 zur Rückführung R (z. B. einer Betankungsstation) strömen kann.

Die Rückführleitung 42 ist innerhalb der den Ringraum 38 abdichtenden Überwurfmutter 39 mit einem Anschlussadapter 39 gelagert, der bevorzugt als Einpressfitting ausgebildet ist, um eine hohe Zug- und der Ausreißfestigkeit der Rückführleitung zu gewährleisten. Dadurch können zur Rückführungsseite R hin auch relativ hohe Gasdrücke verwirklicht werden. Dies ist insbesondere dann von Vorteil, wenn die Hochdruck-Verschraubung 25 oder die Zuleitung 12 ein Leck aufweisen sollte, da dann ggf. austretendes Gas innerhalb der Rückführleitung 42 abgeleitet werden kann, also nicht nach außen austreten kann.

Bei Fluidzufuhr kann an der hier nach links zeigenden Stirnseite der Drehhülse 24 bzw. der Gleitscheibe 29 Druck anliegen, so dass sich bei hohen Druckwerten eine beachtliche Axialkraft auf die Drehhülse 24 ergeben würde. Zum Ausgleich ist hier jedoch innerhalb der Drehdurchführung 10 ein nicht dargestellter Durchlass vom Ausgleichsraum 18 aus vorgesehen, bevorzugt in Form einer Schräg- oder Radialbohrung ausgebildet, so dass die Drehhülse 24 weitgehend axialkraftfrei und damit leicht verdrehbar bleibt.

Wie oben erwähnt, wird beim Abkuppeln der Schnellanschlusskupplung 1 das Entlüftungsventil geöffnet. Hierdurch strömt noch anstehendes Druckmedium über die Entlüftungsbohrung 13, die parallel zu der zentralen Fluidpassage im Gehäuse 11 bzw. der Drehdurchführung 10 ausgerichtet ist, und die Schlitze 31 (oder ähnliche Bohrungen) sowie den Ringraum zur Rückführleitung 42 hin. Der Ringraum 38 ist durch Dichtungen 16 z.B. im Eckbereich zwischen Anschlussadapter 40 und Überwurfmutter 39 abgedichtet. Die an die Zuleitung 12 angeschlossene Drehhülse 24 ist ebenso wie die Rückführleitung 42 relativ zueinander verdrehbar und gegenüber dem stationären Gehäuse 11 innerhalb der Drehdurchführung 10 verdrehbar angeschlossen, so dass die Rückführleitung 42 und die dazu koaxial verlaufende Fluidleitung 12 sich somit nicht verdrillen können.

Es sei darauf hingewiesen, dass die hier in die Schnellanschlusskupplung 1 integrierte Drehdurchführung 10 auch als gesondertes Bauteil ausgebildet sein kann, insbesondere als Nachrüstteil für vorhandene Kupplungen. Hierbei würde die Drehdurchführung 10 für die beiden koaxial zueinander verlaufenden Leitungen 12 und 42 etwa entlang dem Ausgleichsraum 18 enden, wobei dann das gegenüber der Drehhülse 24 liegende Gehäuse 11 mit einem separaten Leitungsanschluss versehen wäre.

Wie oben erwähnt, können in der Rückführleitung 42 relativ hohe Druckwerte verwirklicht werden, so dass auch die abgewandelte Anordnung gemäß Fig. 2 möglich ist, also die beiden koaxial zueinander verlaufenden Leitungen 12 und 42 in ihrer Durchflussrichtung umgekehrt eingesetzt werden können. Hierbei erfolgt die Rückleitung des entlüfteten Medium zur Rückführungsseite R hin über die hier zentrale Leitung 42, während die Zuleitung von der hier rechten Betankungsseite über eine Schrägbohrung Z in der hier ringförmig um die Leitung 42 herum koaxial angeordnete Zuleitung 12 erfolgt. Von dort wird das Druckmedium wieder über eine Schrägbohrung Z zur zentralen Fluidpassage im Bereich der Drehhülse 24 geführt, um dann wie bei Fig. 1 gemäß dem Doppelpfeil in der Anschlusskupplung 1 zu münden. Die funktionsgleichen Bauteile sind hierbei wie in Fig. 1 mit identischen Bezugszeichen versehen.

Die Entlüftung erfolgt bei Fig. 2 ebenso wie bei Fig.1 über Entlüftungsbohrungen 13 und einen Ringraum 38 um die Drehhülse 24. In diesem Bereich der Drehdurchführung 10, also innerhalb des Rings 30 ist eine Schrägbohrung E vorgesehen, die das entlüftete Medium in die zentrale Rückführleitung 42 leitet. An der hier angedeuteten Trennstelle zwischen rechter und linker Hälfte des Hochdruckschlauches ist die Richtung des Mediumflusses mit Pfeilen eingezeichnet, wobei ein derartiger Hochdruckschlauch mehrere Meter lang sein kann. An der hier rechten Seite (Tankstellenseite) ist ein Adapter A angebracht, wobei die Rückführleitung 42 wiederum über eine (zweite) Schrägbohrung E im Adapter A zur Rückführungsseite R hinführt. Es sei darauf hingewiesen, dass ein ähnlicher Adapter A auch auf dem rechten Schlauchende der koaxialen Leitungen 12 und 42 der Ausführung in Fig. 1 angebracht sein kann. Der äußere Hüllschlauch dient somit bei beiden Ausführungen auch zum Schutz der koaxialen, zentralen Leitung, wobei der Ringraum um die zentrale Leitung herum entweder zur Zuführung als auch zur kontrollierten Ableitung von Gasen am Rückführungsanschluss R des Adapters A verwendet werden kann.

## Patentansprüche

1. Drehdurchführung mit einer Gasrückführung, insbesondere zum Befüllen von Fahrzeug-Gastanks mit einer Schnellanschlusskupplung (1), die mit einer Zuleitung (12) und einer Rückführleitung (42) verbunden ist, wobei die Zuleitung (12) und die Rückführleitung (42) koaxial ineinander angeordnet sind und jeweils koaxial zueinander angeordnete Anschlussadapter (14 bzw. 40; A) aufweisen und die Anschlussadapter (14, 40) innerhalb einer ersten Überwurfmutter (39) angeordnet sind, die einen nach außen abgedichteten Ringraum (38) umschließt, in den zentral eine Drehhülse (24) mündet, **dadurch gekennzeichnet, dass**
die Drehhülse (24) mit einer zweiten Überwurfmutter (28) und einer Gegenhülse (27) mit dem Gehäuse (11) der Schnellanschlusskupplung drehbar verbunden ist.und auf dieser Überwurfmutter (28) ein Ring (30) verdrehbar gelagert ist, wobei Schlitze (31) zur Gas-Rückführung zum Ringraum (38) hin vorgesehen sind.

2. Drehdurchführung nach Anspruch 1, **dadurch gekennzeichnet, dass** die Zuleitung (12) an die Drehhülse (24) mit einer Hochdruckverschraubung (25) angeschlossen ist.

3. Drehdurchführung nach Anspruch 1 oder 2, **dadurch gekennzeichnet, dass** die Drehhülse (24) umfangsseitig einen Ringbund (26) aufweist, der gegenüber dem Gehäuse (11) der Schnellanschlusskupplung (1) drehbar ist.

4. Drehdurchführung nach einem der Ansprüche 1 bis 3, **dadurch gekennzeichnet, dass** der Ring (30) die Schlitze (31) an seinem Innenumfang aufweist.

5. Drehdurchführung nach Anspruch 4, **dadurch gekennzeichnet, dass**
die Schlitze (31) einer Entlüftungsbohrung (13) im Gehäuse (11) und ggf. einem Ausgleichsraum (18) gegenüberliegen.

6. Drehdurchführung nach Anspruch 5, **dadurch gekennzeichnet, dass**
der Ringraum (38) und der Ausgleichsraum (18) mittels Dichtungen (16, 17, usw.) nach außen hin abgedichtet sind.

7. Drehdurchführung nach einem der Ansprüche 1 bis 6, **dadurch gekennzeichnet, dass** die Drehhülse (24) im Einlassbereich einer Schnellanschlusskupplung (1) angeordnet ist.

8. Drehdurchführung nach einem der Ansprüche 1 bis 7, **dadurch gekennzeichnet, dass** die Rückführleitung (42) zentral innerhalb der Zuleitung (12) angeordnet ist.

9. Drehdurchführung nach Anspruch 8, **dadurch gekennzeichnet, dass**
von der zentralen Rückführleitung (42) wenigstens eine Schrägbohrung (E) radial nach außen führt, insbesondere an einem Adapter (A) zur Rückleitungsseite (R) hin und/oder zum Ringraum (38) an der Drehdurchführung (10).

## Claims

1. A rotary transmission leadthrough with a gas return line, especially for filling a vehicle gas fuel tank with a rapid-action connection coupling (1) which is connected with a supply line (12) and a return line (42), wherein the supply line (12) and the return line (42) are arranged in a coaxial manner in relation to each other and each comprise connection adapters (14 and 40; A) and wherein the connection adapters (14, 40) are arranged within a first union nut (39) which encloses an outwardly sealed annular cavity (38), into which a rotary sleeve (24) opens centrally, **characterized in that** the rotary sleeve (24) with a second union nut (28) and a counter-sleeve (27) is rotatably connected with the housing (11) of the rapid-action connection coupling and a ring (30) is rotatably held on said union nut (28), wherein slits (31) for gas recirculation lead to the annular cavity (38).

2. Rotary transmission leadthrough according to claim 1, **characterized in that** the supply line (12) is connected to the rotary sleeve (24) with a high-pressure screw joint (25).

3. Rotary transmission leadthrough according to claim 1 or 2, **characterized in that** the rotary sleeve (24) comprises an annular collar (26) on the circumference which is rotatable relative to the housing (11) of the rapid-action connection coupling (1).

4. Rotary transmission leadthrough according to one of claims 1 to 3, **characterized in that** the ring (30) comprises the slits (31) on its inner circumference.

5. Rotary transmission leadthrough according to claim 4, **characterized in that** the slits (31) are opposite of a vent bore (13) in the housing (11) and optionally a compensating cavity (18).

6. Rotary transmission leadthrough according to claim 5, **characterized in that** the annular cavity (38) and the compensating cavity (18) are sealed towards the outside by means of gaskets (16, 17, etc.).

7. Rotary transmission leadthrough according to one of the claims 1 to 6, **characterized in that** the rotary sleeve (24) is arranged in the inlet region of a rapid-action connection coupling.

8. Rotary transmission leadthrough according to one of the claims 1 to 7, **characterized in that** the return line (12) is arranged centrally within the supply line (12).

9. Rotary transmission leadthrough according to claim 8, **characterized in that** at least one oblique bore (E) leads radially to the outside from the central return line (42), especially on an adapter (A) towards the return line side (R) and/or towards the annular cavity (38) on the rotary transmission leadthrough (10).

## Revendications

1. Traversée rotative équipée d'un système de retour gazeux, notamment dévolue au remplissage de réservoirs de gaz montés sur véhicules, comprenant un accouplement rapide (1) relié à un conduit d'arrivée (12) et à un conduit de retour (42), ledit conduit d'arrivée (12) et ledit conduit de retour (42) étant logés coaxialement l'un dans l'autre et étant pourvus d'adaptateurs respectifs de raccordement (14, respectivement 40 ; A), disposés de manière mutuellement coaxiale, et lesdits adaptateurs de raccordement (14, 40) étant situés à l'intérieur d'un premier capuchon taraudé (39) circonscrivant un espace annulaire (38) qui est rendu étanche vers l'extérieur, et au centre duquel débouche une douille rotative (24),
**caractérisée par le fait que**
la douille rotative (24) est reliée au boîtier (11) de l'accouplement rapide avec faculté de rotation, par un second capuchon taraudé (28) et une douille complémentaire (27), et une bague (30) est montée à rotation sur ledit capuchon taraudé (28), des fentes (31) étant prévues pour assurer le retour gazeux en direction de l'espace annulaire (38).

2. Traversée rotative selon la revendication 1, **caractérisée par le fait que** le conduit d'arrivée (12) est raccordé à la douille rotative (24) par un système de vissage (25) résistant à de hautes pressions.

3. Traversée rotative selon la revendication 1 ou 2, **caractérisée par le fait que** la douille rotative (24) est munie, périphériquement, d'un collet annulaire (26) pouvant tourner par rapport au boîtier (11) de l'accouplement rapide (1).

4. Traversée rotative selon l'une des revendications 1 à 3, **caractérisée par le fait que**
la bague (30) présente les fentes (31) sur son pourtour intérieur.

5. Traversée rotative selon la revendication 4, **caractérisée par le fait que** les fentes (31) sont situées en vis-à-vis d'un alésage de ventilation (13) pratiqué dans le boîtier (11) et, le cas échéant, en vis-à-vis d'une chambre de compensation (18).

6. Traversée rotative selon la revendication 5, **caractérisée par le fait que** l'étanchéité de l'espace annulaire (38) et de la chambre de compensation (18) est assurée, vers l'extérieur, au moyen de garnitures d'étanchement (16, 17, etc.).

7. Traversée rotative selon l'une des revendications 1 à 6, **caractérisée par le fait que**
la douille rotative (24) est disposée dans la zone d'admission d'un accouplement rapide (1).

8. Traversée rotative selon l'une des revendications 1 à 7, **caractérisée par le fait que**
le conduit de retour (42) occupe une position centrale à l'intérieur du conduit d'arrivée (12).

9. Traversée rotative selon la revendication 8, **caractérisée par le fait qu'**au moins un alésage oblique (E) s'étend vers l'extérieur dans le sens radial à partir du conduit central de retour (42), notamment en direction du côté reflux (R) sur un adaptateur (A), et/ou vers l'espace annulaire (38) sur ladite traversée rotative (10).
